# EUROPÄISCHE PATENTSCHRIFT

(11) **EP 0 835 512 B1**
(45) Veröffentlichungstag und Bekanntmachung des Hinweises auf die Patenterteilung: **28.04.1999**
(21) Anmeldenummer: 96921866.8
(22) Anmeldetag: 14.06.1996
(51) Int. Cl.: G21C 9/016

(54) **KERNREAKTOR MIT EINER AUFFANGKAMMER FÜR KERNSCHMELZE**
NUCLEAR REACTOR WITH MOLTEN CORE COLLECTING CHAMBER
REACTEUR NUCLEAIRE POURVU D'UNE CHAMBRE COLLECTRICE POUR LE C UR EN FUSION

(30) Priorität: 28.06.1995 DE 19523548
(43) Veröffentlichungstag der Anmeldung: 15.04.1998
(73) Patentinhaber: SIEMENS AKTIENGESELLSCHAFT, 80333 München (DE)
(72) Erfinder: WISTUBA, Lothar, D-91074 Herzogenaurach (DE); HOLLMANN, Josef, D-96132 Schlüsselfeld (DE)
(86) Internationale Anmeldenummer: DE9601059
(87) Internationale Veröffentlichungsnummer: WO9701850

(56) Entgegenhaltungen:
- DE-A- 4 339 904
- GB-A- 1 302 319
- GB-A- 1 511 620
- GB-A- 2 236 210
- US-A- 4 289 582
- US-A- 5 307 390

## Beschreibung

Die Erfindung betrifft einen Kernreaktor mit einer Auffangkammer für Kernschmelze, deren Wande mehrlagige Schutzschichten umfassen, darunter eine Teilschicht aus feuerfestem Beton und eine weitere Teilschicht aus Keramiksteinen, wobei die Schutzschichten am Konstruktionsbeton der Auffangkammer verankert sind.

Aus der DE-OS 43 39 904 ist ein Kernreaktor der oben genannten Art bekannt, bei dem die Teilschichtem mit gemeinsamen Zugankern am Konstruktionsbeton befestigt sind, und zwar ist für jeden Keramikstein ein solcher Zuganker vorhanden. Daraus ergibt sich ein verhältnismäßig großer baulicher Aufwand, weil die Zuganker im Hinblick auf Dehnfugen recht genau positioniert sein müssen.

In der Teilschicht aus feuerfestem Beton können beim Bekannten Kernreaktor zusätzliche Verankerungsstellen vorgesehen sein. Sie werden mit dem feuerfesten Beton umgossen.

Demgegenüber ist es das Ziel der Erfindung, eine bauliche Vereinfachung, insbesondere eine Verringerung der Zahl der Befestigungsstellen zu erreichen. Gleichzeitig soll aber auch sichergestellt sein, daß die Kernschmelze nicht zu einem Lösen der Verankerung vom Konstruktionsbeton führen kann.

Erfindungsgemäß ist vorgesehen, daß die Teilschicht aus feuerfestem Beton in Form von vorgefertigten Blöcken ausgebildet ist, die miteinander verfugt und am Konstruktionsbeton befestigt sind, und daß die Teilschicht aus Keramiksteinen an den Blöcken der Teilschicht aus feuerfestem Beton abgespannt ist.

Die Verfugung, insbesondere ein Eingreifen von Nut und Feder, der vorgefertigten Blöcke ermöglicht ohne Einbuße an baulicher Stabilität eine erhebliche Verringerung der Zahl der Befestigungsstellen. Außerdem können an den Blöcken die Keramiksteine abgespannt werden, sodaß eine sicherheitstechnisch vorteilhafte Aufteilung der Verankerung der Teilschichten möglich wird.

Die Verringerung der Zahl der Befestigungsstellen kann noch dadurch gesteigert werden, daß die Keramiksteine miteinander verfugt, beispielsweise in Feder-Nut-Manier oder mit abwechselnd orientierten T-Profil, und nur an einzelnen Stellen abgespannt sind.

Die Blöcke der feuerfesten Schicht können mit bekannten Mitteln befestigt werden. Besonders günstig ist es, wenn die Blöcke aus feuerfestem Beton mit Spannelementen gehalten sind, die in den Konstruktionsbeton einbetoniert sind und durch Aussparungen der Blöcke greifen.

Die Blöcke können ferner mit Keramikankern abgespannt werden. Die Keramikanker können vorteilhaft Gewindehülsen enthalten, die die Montage erleichtern und die Einleitung der Haltekräfte verbessern.

Eine weitere vorteilhafte Ausbildung der Erfindung besteht darin, daß die Keramiksteine mit T-Ankern befestigt sind, die in C-Schienen sitzen. Auch hierdurch erhält man bei günstiger Montage eine weiträumige Verteilung der Haltekräfte.

Um das Eindringen von Kernschmelze zu vermeiden sowie zum Schutz der Verankerungselemente können die Fugen zwischen den Keramiksteinen mit Zirkonfilz ausgefüllt sein. Die Fugen dienen hierbei der thermischen Ausdehnung der Zirkonsteine.

Weitere Einzelheiten der Erfindung ergeben sich aus der folgenden Beschreibung von Ausführungsbeispielen anhand der Zeichnung. Es zeigt
- FIG 1: einen Ausschnitt aus einer erfindungsgemäß gestalteten Wand, dem Boden, eines Auffangraumes für Kernschmelze,
- FIG 2: eine Einzelheit der Verankerung der'Blöcke der Teilschicht aus feuerfestem Beton in größerem Maßstab,
- FIG 3: eine Einzelheit der Befestigung der Keramiksteine in größerem Maßstab,
- FIG 4: eine andere Ausführungsform der Wandgestaltung,
- FIG 5: eine Einzelheit der Befestigung der Keramiksteine nach FIG 4 in größerem Maßstab,
- FIG 6: eine weitere Ausführungsform der Wandgestaltung,
- FIG 7: eine Einzelheit der Befestigung der Keramiksteine nach FIG 6 in größerem Maßstab,
- FIG 8: einen Keramikstein in perspektivischer Darstellung,
- FIG 9: eine aus Keramiksteinen nach FIG 8 zusammengesetzte Schicht mit der Lage einer Befestigungsstelle,
- FIG 10: eine Befestigung eines Keramiksteines mit einer Ankerplatte,
- FIG 11: eine Befestigung eines Keramiksteines mit einer Schiene,
- FIG 12: eine Anordnung von Zirkon-Steinen mit alternierendem T-Profil,
- FIG 13: eine Anordnung der Zirkon-Oxid-Steine mit T-Profil in einer Draufsicht,
- FIG 14: eine Einzelheit der Befestigung der Keramiksteine nach dem Nut-Feder-Prinzip,
- FIG 15: eine Einzelheit der Befestigung zweier Blöcke der Teilschicht aus feuerfestem Beton in einem Längsschnitt und
- FIG 16: die Befestigung nach FIG 15 in einer Draufsicht.

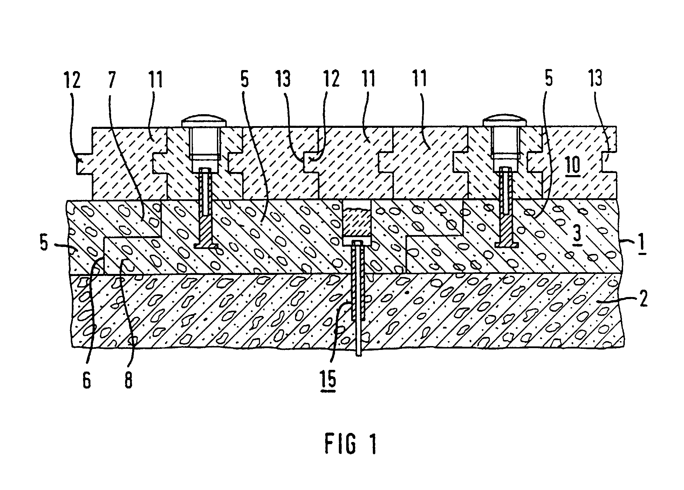

Die FIG 1 zeigt eine Wand, insbesondere die Bodenpartie, eines Auffangraumes für Kernschmelze, der beispielsweise so wie in FIG 11 der DE-OS 43 39 904 in einem Reaktorgebäude angeordnet ist. Der die Wand 1 bestimmende Konstruktionsbeton 2 trägt eine Teilschicht 3 aus feuerfestem Beton, der in Form von vorgefertigten Blöcken 5 aufgelegt ist. Die Blöcke 5 sind miteinander verfugt, denn sie greifen längs der Fugen 6 mit höhenversetzten Vorsprüngen 7 und 8 übereinander.

Auf der Teilschicht 3 sitzt eine Teilschicht 10, die aus Keramiksteinen 11, insbesondere ZrO₂-Steinen, besteht. Die Keramiksteine 11 sind ebenfalls miteinander verfugt; denn sie greifen jeweils mit einer Feder 12 in eine Nut 13 des benachbarten Steins 11.

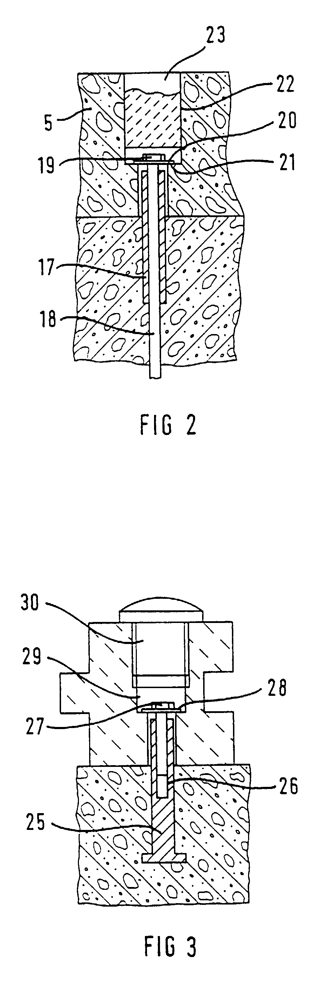

Die Verankerung 15 der Blöcke 5 am Konstruktionsbeton 2 umfaßt, wie FIG 2 zeigt, eine Gewindemuffe 17, die auf eine in den Konstruktionsbeton 2 eingelassene Stahlbewehrung 18 aufgeschraubt ist. In die Gewindemuffe 17 greift von oben eine Schraube 19, die mit einer Scheibe 20 auf die Unterseite 21 einer Ausnehmung 22 in einem Block 5 drückt. Nach oben hin ist die Ausnehmung 22 mit einem Zirkondioxidschraubstopfen 23 verschlossen.

Aufgrund der Verfugung, d.h. des Ineinandergreifens von Nut und Feder, sind die Keramiksteine 11 der Teilschicht 10 nur an wenigen Stellen an der Teilschicht 3 zu befestigen. Dazu sind in einzelne Blöcke 5 Stahlanker 25 mit einer Gewindebohrung 26 eingelassen, in die Schrauben 27 eingeschraubt werden können. Die Anker können hierbei auch aus Keramik gefertigt sein. Diese drücken über eine Scheibe 28 auf den Boden einer Ausnehmung 29 des Keramiksteins 11, die danach mit einem Gewindestopfen 30 aus Zirkondioxid dicht verschlossen wird.

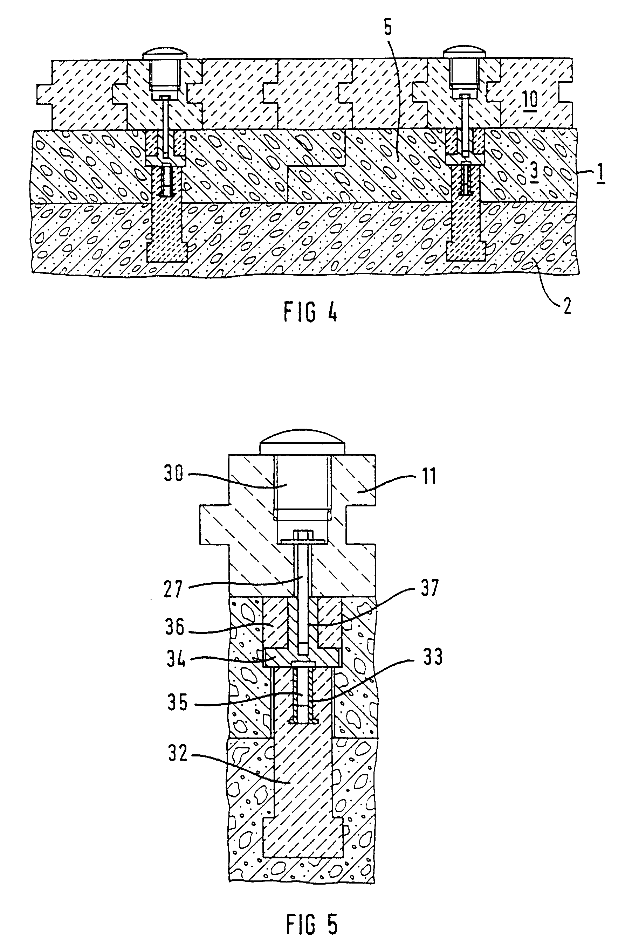

Bei der Ausführungsform nach den FIG 4 und 5 sind die sonst in gleicher Weise aus Blöcken 5 und verfugten Steinen 11 zusammengesetzten Teilschichten 3 und 10 mit Keramikankern 32 am Konstruktionsbeton 2 befestigt. Die Keramikanker 32 enthalten eine Gewindehülse 33, in die ein Stahl-Einschraubstück 34 mit einem Gewindezapfen 35 eingeschraubt ist. Das Einschraubstück 34 hat im Querschnitt ein rechtwinkliges Profil und trägt eine Keramikhülse 36 zur Verringerung der Wärmebelastungen. In einer zur Oberseite führenden Gewindebohrung 37 sind dann einzelne Steine 11 wieder mit Schrauben 27 befestigt, die wie nach FIG 3 in eine Ausnehmung 29 greifen und mit einem Schraubstopfen 30 abgedeckt sind.

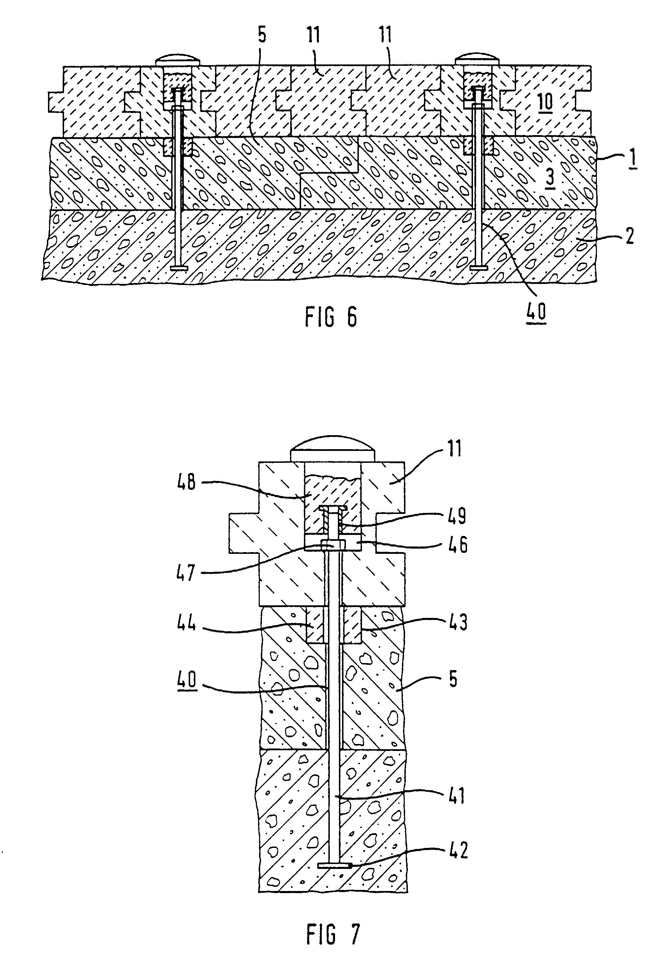

Für die Ausführungsform nach FIG 6 ist die gemeinsame Befestigung 40 von einzelnen Steinen 11 der Teilschicht 10 und von Blöcken 5 der Teilschicht 3 in FIG 7 vergrößert dargestellt. Sie umfaßt eine metallische Ankerschraube 41 mit einer Fußplatte 42, die sich durch einen Block 5 und den darüber liegenden Stein 11 erstreckt.

An der Oberseite des Blockes 5 ist eine im Durchmesser vergrößerte Ausnehmung 43 vorgesehen, in der eine Keramikhülse 44 gegebenenfalls mit einer inneren Metallauskleidung als Mutter sitzt und auf den Boden der Ausnehmung 43 drückt. Wenn man die Keramikhülse 44 nur als thermische Isolierung nutzen und mechanisch nicht beanspruchen will, dann kann man auch eine gesonderte Mutter verwenden, die nach dem Anziehen nur mit der Keramikhülse 44 abgedeckt wird.

Die Ankerschraube 41 erstreckt sich ferner durch den Stein 11 in eine Ausnehmung 46. Dort trägt sie eine Mutter 47, die auf den Boden der Ausnehmung 46 drückt. Nach dem Anziehen der Mutter 47 kann die Ausnehmung 46 mit einem Zirkondioxidstopfen 48 verschlossen werden, der mit einer Gewindebuchse 49 auf das über die Mutter 47 hinausragende Ende der Ankerschraube 41 aufgeschraubt wird.

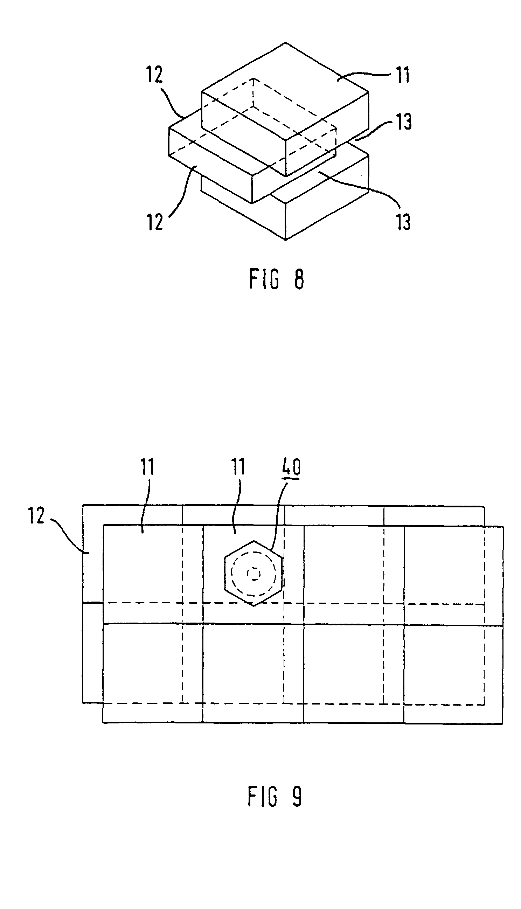

In FIG 8 ist zu sehen, daß die Feder 12 des Steines 11 aus der im Prinzip kubischen Form in zwei zueinander senkrechten Richtungen vorspringt. Entsprechend ist die Nut 13 auch in zwei zueinander senkrechten Richtungen eingezogen. Die daraus resultierende Verfugung ist in FIG 9 dargestellt. Sie ermöglicht es, mit einer Befestigungsstelle 40 für mehr als einen Stein 11, insbesondere neun und mehr Steine 11, auszukommen. Eine direkte Befestigung jedes einzelnen Steins ist ebenfalls möglich.

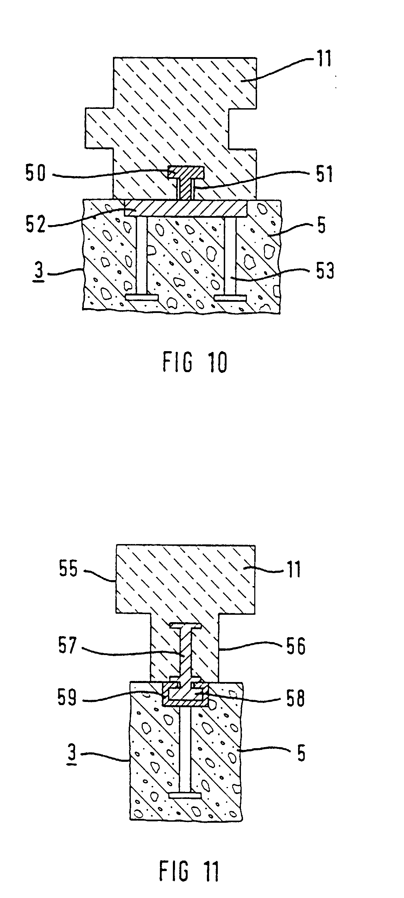

Die FIG 10 zeigt, daß die Steine 11 trotz der Verfugung auch mit einer im Querschnitt T-förmigen Stahlschiene 50 befestigt werden können, auf die sie mit einer im Querschnitt ebenfalls T-förmigen Nut 51 aufgeschoben werden. Die Stahlschiene 50 ist an einer Ankerplatten 52 befestigt, die in die Oberseite einzelner Blöcke 5 eingelassen und mit Ankerstäben 53 befestigt ist. Sie verläuft in Richtung senkrecht zur Zeichenebene. Die Ankerplatte 52 ist, wie die in FIG 9 dargestellte Befestigungsstelle 40, nur an wenigen Steinen 11 angeordnet, so daß über eine Ankerplatte 52 neun und mehr Steine befestigt sind.

Bei der Ausführungsform nach FIG 11 haben die Steine 11 ein im Querschnitt T-förmigen Profil, wobei die Höhe von Vorsprung 55 und Hinterschneidung 56 gleich ist, damit die Steine 11 durch abwechselndes Verdrehen ineinander gestapelt werden können. Jede zweite Reihe der Steine 11 enthält in ihrem der Teilschicht 3 zugekehrten Fuß einen Anker 57 mit einem verbreiterten, aus dem Stein herausragenden T-förmigen Kopfstück 58. Mit diesem werden diese Steine in eine Schiene 59 mit C-förmigem Profil in dem darunterliegenden Block 5 eingeschoben, so daß sie selbst festgelegt sind und zugleich mit ihren Vorsprung 55 eine benachbarte Reihe Steine 11 ohne Anker 57 niederhalten. Auch die Vorsprünge 55 und Hinterschneidungen 56 können, wie anhand der FIG 8 erläutert wurde, sich in zwei zueinander senkrechte Richtungen erstrecken.

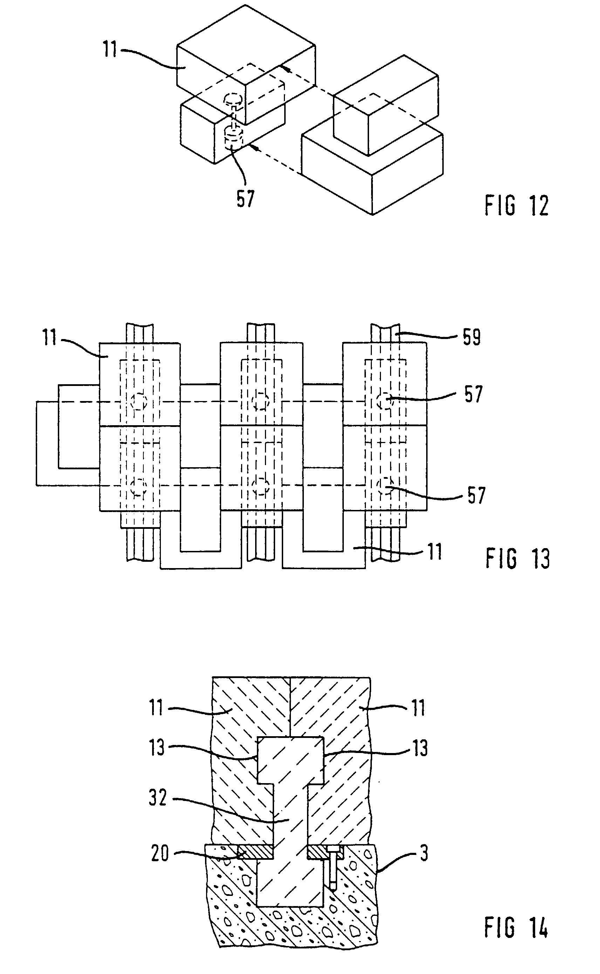

Diese Hinterschneidung der Vorsprünge 55 bei alternierend, d.h. jeweils um 180° gedrehten T-förmigen Steinen 11 ist in FIG 12 analog zu FIG 8 dargestellt. Das sich durch diese Anordnung ergebende Muster der Steine 11 ist in FIG 13 dargestellt. In einer Richtung senkrecht zur Schiene 59 ist somit jeder zweite Stein 11 mit einer entsprechenden Schiene 59 verankert.

FIG 14 zeigt in einer vergrößerten Darstellung in einem Längsschnitt eine Verankerung benachbarter Steine 11, wobei ein Keramikanker 32 in die Teilschicht 3 aus feuerfestem Beton eingelassen ist. Dieser kann auch eingedreht oder geschraubt sein. Der Keramikanker 32 greift an der Berührungsstelle von vier aneinandergrenzenden Steinen 11 als Feder in eine jeweils entsprechende Nut der Steine 11 ein. Die Steine 11 sind hierbei wie in FIG 8 dargestellt aufgebaut, wobei lediglich eine entsprechende Modifikation an der Stelle, an der der Anker 32 eingreift, erfolgt ist. Jeder Stein 11 weist hierzu an einem Eckpunkt eine Ausnehmung auf, in der ein Viertel des Ankers 32 aufgenommen wird. Vier Steine 11 umschließen somit einen Anker 32 und werden dadurch fixiert. Der Anker 32 hat ein Doppel-T-Profil und ist in der Teilschicht 3 durch eine geteilte und mit der Teilschicht 3 verschraubte Stahlscheibe befestigt. Der Anker 32 kann auch unmittelbar in die Teilschicht 3 eingelassen sein. Es ist ebenfalls möglich, den Anker 32 als eine Schiene analog zu der in FIG 11 und in FIG 13 dargestellten Schiene 59 auszuführen.

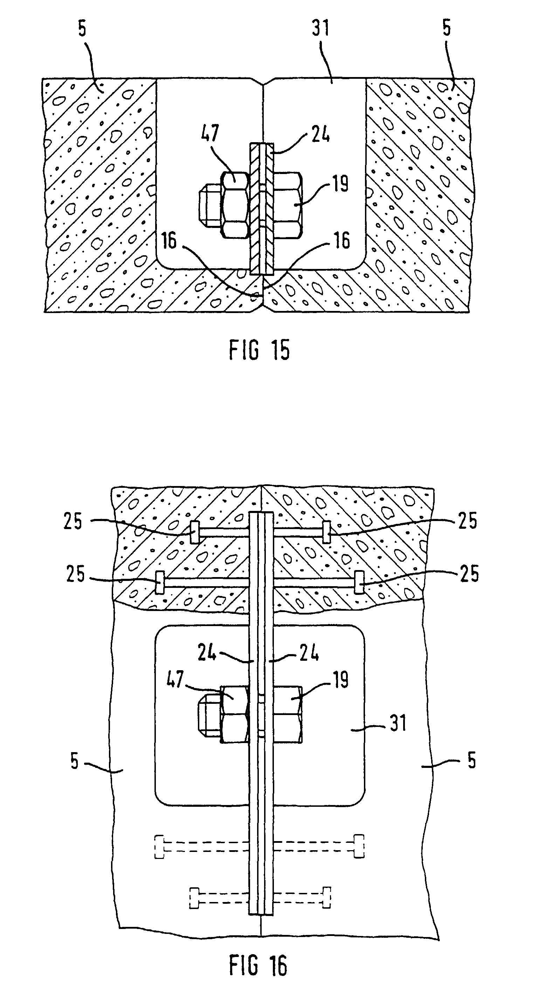

FIG 15 und FIG 16 zeigen in einem Längsschnitt bzw. in einer Draufsicht eine Verbindung von Blöcken 5 der Teilschicht 3 aus feuerfestem Beton. An einer Stirnseite 16 eines Blocks 5 ist eine entlang der Stirnseite 16 verlaufende metallische Platte 24 über vier Stahlanker 25 mit dem Block 5 festverbunden. In einem Bereich zwischen den Stahlankern 25 ist eine nach oben, d.h. zur Teilschicht 10 offene Ausnehmung 31 vorgesehen, in der eine Schraube 19 durch die Platte 24 geführt ist. Zwei benachbarte Blöcke 5 stoßen jeweils mit ihrer Platte 24 aneinander, so daß die Schraube 19 durch beide Platten 24 hindurchgeführt ist und mit einer Mutter 27 fest angezogen ist, so daß die beiden Platten 24 und damit die beiden Blöcke 5 fest miteinander verbunden sind. Durch die entsprechenden Ausnehmungen 31 der beiden Blöcke 5 wird eine Tasche in dem feuerfesten Beton gebildet, die mit einem Keramikstopfen (hier nicht dargestellt) verschließbar ist. Durch Verwendung einer solchen Verbindung zwischen Blöcken 5 der Teilschicht 3 ist ebenfalls erreicht, daß nur einzelne Blöcke mit dem unterhalb der Blöcke 5 liegenden Konstruktionsbeton 2 zu verbinden sind.

Die Erfindung zeichnet sich durch eine mehrlagige Schutzschicht aus, welche insbesondere an der Bodenpartie der Auffangkammer angeordnet ist. Eine erste Teilschicht aus feuerfestem Beton ist in Form von vorgefertigten Blöcken ausgebildet und breitet sich über dem Konstruktionsbeton der Auffangkammer aus. Durch eine Befestigung der Blöcke untereinander und/oder einer Verzahnung der Blöcke durch ineinandergreifende Vorsprünge erfolgt eine Befestigung der Blöcke an dem Konstruktionsbeton an einzelnen wenigen Stellen, so daß nur wenige Blöcke unmittelbar, beispielsweise durch entsprechende Anker, mit dem Konstruktionsbeton fest verbunden sind. Durch ein Ineinandergreifen ebenfalls vorgefertigter Keramiksteinen wird eine Teilschicht gebildet, die auf der Teilschicht aus feuerfestem Beton aufliegt und ebenfalls nur an einzelnen Keramiksteinen mit dieser fest verbunden ist. Hierdurch findet eine Entkopplung der Befestigung der einzelnen Teilschichten statt, wodurch die Gefahr des Eindringens von Kernschmelze entlang der Befestigungsstellen in dem Konstruktionsbeton wirksam verhindert wird. Zudem ist eine einfache Montage der Schutzschichten erreicht. Die beschriebenen oder weitere Ausführungsformen können miteinander kombiniert werden.

## Patentansprüche

1. Kernreaktor mit einer Auffangkammer für Kernschmelze, die zumindest eine Wand, insbesondere einen Boden, mit einer mehrlagigen Schutzschicht umfaßt, wobei eine Teilschicht (3) mit feuerfestem Beton und eine weitere Teilschicht (10) mit Keramiksteinen aufgebaut ist, wobei die Schutzschichten am Konstruktionsbeton (2) der Auffangkammer verankert sind, **dadurch gekennzeichnet,** daß die Teilschicht (3) aus feuerfestem Beton in Form von vorgefertigten Blöcken(5) ausgebildet ist, die miteinander verfugt und am Konstruktionsbeton (2) befestigt sind, und daß die Teilschicht (10) aus Keramiksteinen (11) an den Blöcken (5) der Teilschicht (3) aus feuerfestem Beton abgespannt ist.

2. Kernreaktor nach Anspruch 1, **dadurch gekennzeichnet,** daß die Keramiksteine (11) miteinander verfugt und nur an einzelnen Stellen abgespannt sind.

3. Kernreaktor nach Anspruch 1, **dadurch gekennzeichnet,** daß die Blöcke (5) aus feuerfestem Beton mit Spannelementen (15) gehalten sind, die in den Konstruktionsbeton (2) einbetoniert sind und durch Aussparungen der Blöcke (5) greifen.

4. Kernreaktor nach Anspruch 1, **dadurch gekennzeichnet,** daß die Keramiksteine (11) mit Keramikankern (32) abgespannt sind.

5. Kernreaktor nach Anspruch 4, **dadurch gekennzeichnet,** daß die Keramikanker (32) Gewindehülsen (33) enthalten.

6. Kernreaktor nach Anspruch 1, **dadurch gekennzeichnet,** daß die Keramiksteine (11) mit T-Ankern (57) befestigt sind, die in C-Schienen (59) sitzen.

7. Kernreaktor nach Anspruch 1, **dadurch gekennzeichnet,** daß Fugen zwischen den Keramiksteinen (11) mit Zirkonfilz ausgefüllt sind.

## Claims

1. Nuclear reactor with a collection chamber for core melt, which chamber comprises at least one wall, in particular a bottom, with a multilevel protective layer, one layer part (3) being made with refractory concrete and another layer part (10) being made with ceramic bricks, the protective layers being anchored to the structural concrete (2) of the collection chamber, characterized in that the layer part (3) made of refractory concrete is designed in the form of prefabricated blocks (5) which are jointed together and are fastened to the structural concrete (2), and in that the layer part (10) made of ceramic bricks (11) is braced to the blocks (5) of the layer part (3) made of refractory concrete.

2. Nuclear reactor according to Claim 1, characterized in that the ceramic bricks (11) are jointed together and are only braced at individual points.

3. Nuclear reactor according to Claim 1, characterized in that the blocks (5) made of refractory concrete are held with tensioning elements (15) which are concreted into the structural concrete (2) and engage through holes in the blocks (5).

4. Nuclear reactor according to Claim 1, characterized in that the ceramic bricks (11) are braced with ceramic anchors (32).

5. Nuclear reactor according to Claim 4, characterized in that the ceramic anchors (32) contain threaded sleeves (33).

6. Nuclear reactor according to Claim 1, characterized in that the ceramic bricks (11) are fastened with T-anchors (57) which are seated in C-rails (59).

7. Nuclear reactor according to Claim 1, characterized in that joints between the ceramic bricks (11) are filled with zircon felt.

## Revendications

1. Réacteur nucléaire avec une chambre collectrice pour coeur en fusion, comprenant au moins une paroi, en particulier un fond, avec une couche de protection à plusieurs couches, une couche partielle (3) étant composée de béton réfractaire et une autre couche partielle (10) étant composée de pierre céramique, les couches de protection étant ancrées au béton constructif (2) de la chambre collectrice, caractérisé en ce que la couche partielle (3) est constituée en béton réfractaire sous forme de blocs préfabriqués (5) qui sont jointoyés l'un avec l'autre et fixés sur le béton constructif (2), et en ce que la couche partielle (10) en pierre céramique (11) est fixée à tension sur les blocs (5) de la couche partielle (3) en béton réfractaire.

2. Réacteur nucléaire selon la revendication 1, caractérisé en ce que les pierres céramique (11) sont jointoyées l'une avec l'autre et ne sont fixées à tension qu'en certains endroits.

3. Réacteur nucléaire selon la revendication 1, caractérisé en ce que les blocs en béton réfractaire (5) sont maintenus par des éléments tendeurs (15) qui sont coulés dans le béton constructif (2) et qui prennent par des évidements des blocs (5).

4. Réacteur nucléaire selon la revendication 1, caractérisé en ce que les pierres céramique (11) sont fixées à tension par des ancres en céramique (32).

5. Réacteur nucléaire selon la revendication 4, caractérisé en ce que les ancres en céramique (32) contiennent des douilles filetées (33).

6. Réacteur nucléaire selon la revendication 1, caractérisé en ce que les pierres céramique (11) sont fixées par des ancres en forme de 'T' (57), posées dans des rails en forme de 'C' (59).

7. Réacteur nucléaire selon la revendication 1, caractérisé en ce que les joints entre les pierres céramique (11) sont remplis de feutre au zircon.
